# EUROPÄISCHE PATENTSCHRIFT

(11) **EP 2 732 347 B1**
(45) Veröffentlichungstag und Bekanntmachung des Hinweises auf die Patenterteilung: **29.07.2015**
(21) Anmeldenummer: 12732978.7
(22) Anmeldetag: 29.06.2012
(51) Int. Cl.: G05B 19/05, G05B 19/408

(54) **VERFAHREN UND SYSTEM ZUR DYNAMISCHEN VERTEILUNG VON PROGRAMMFUNKTIONEN IN VERTEILTEN STEUERUNGSSYSTEMEN**
METHOD AND SYSTEM FOR THE DYNAMIC DISTRIBUTION OF PROGRAM FUNCTIONS IN DISTRIBUTED CONTROL SYSTEMS
PROCÉDÉ ET SYSTÈME DE RÉPARTITION DYNAMIQUE DE FONCTIONS DE PROGRAMME DANS DES SYSTÈMES DE COMMANDE RÉPARTIS

(30) Priorität: 12.07.2011 DE 102011107646
(43) Veröffentlichungstag der Anmeldung: 21.05.2014
(73) Patentinhaber: Phoenix Contact GmbH & Co. KG, 32825 Blomberg (DE)
(72) Erfinder: JESCHIN, Jörg, 37574 Einbeck (DE)
(74) Vertreter: Blumbach Zinngrebe
(86) Internationale Anmeldenummer: PCT/EP2012/002758
(87) Internationale Veröffentlichungsnummer: WO 2013/007349

(56) Entgegenhaltungen:
- EP-A2- 2 251 755
- WO-A1-2011/160695

## Beschreibung

Die vorliegende Erfindung betrifft ein Verfahren und ein System zur dynamischen Verteilung von Programmfunktionen in verteilten Steuerungssystemen.

In der Automatisierungstechnik, die für die Prozess- und Fabrikautomation beziehungsweise für die Steuerung von Maschinen Verwendung finden, werden Steuerungssysteme eingesetzt, die eine oder eine Anzahl von verteilten Steuerungseinrichtungen z.B. eine speicherprogrammierbare Steuerung (SPS), und ein applikationsspezifisches Steuerungsprogramm umfasst. Das Steuerungsprogramm wird in vielen Fällen in einer der Norm IEC 61131 entsprechenden Programmiersprache erstellt, die beispielsweise in einem computergestützten Entwicklungssystem eingebettet sein kann, welches das Erstellen des Steuerungsprogramms für ein Steuerungssystem sowie das Erstellen einzelner Programmkomponenten wie Funktionen oder Funktionsblöcke ermöglicht, die zum Beispiel einer oder mehreren der verteilten Steuerungseinrichtungen zugewiesen werden können. Durch ein dazugehöriges Programmiermodell wird festgelegt, wie die Programmkomponenten instanziiert und abgearbeitet werden. Ein zunächst plattformunabhängiges erstelltes Programm kann grundsätzlich auf unterschiedlichen Hardwaretypen ablaufen, wobei vor dem kompilieren und Hochladen des Programms der jeweilige Hardwaretyp festgelegt worden sein muss.

In der weiterentwickelten IEC 61499 Norm werden die aus der IEC 61131 bekannten Funktionsblöcke mit Schnittstellen für Ein- und Ausgabedaten (I/O-Schnittstellen) zusätzlich um Event-Schnittstellen erweitert. Diese Event-Schnittstellen ermöglichen eine Verknüpfung von verschiedenen Funktionsblöcken, deren Abarbeitung jeweils durch ein Ereignis (im englischen als Event bezeichnet) angestoßen werden kann, das durch eine andere Programmkomponente innerhalb und/oder außerhalb einer jeweiligen Steuerungseinrichtung ausgelöst worden sein kann. Das Programmiermodell gemäß der IEC 61499 Norm ermöglicht somit grundsätzlich eine Verknüpfung von einzelnen Programmkomponenten innerhalb eines Steuerungssystems, die auf unterschiedlichen Steuerungseinrichtungen verteilt sind. Ein Datenaustausch zwischen den verteilten Steuerungseinrichtungen in einem Steuerungssystem kann über ein Datennetzwerk erfolgen, z.B. über ein Automatisierungs-Bus-System wie das PROFINET. Die notwendigen Verknüpfungen zwischen den Event-Schnittstellen können in einem Steuerungssystem mit einer Anzahl von verteilten Steuerungseinrichtungen mittels eines protokollbasierten Datenaustauschs erfolgen.

Beim Erstellen eines anwendungsspezifischen Steuerungsprogramms für ein Steuerungssystem muss jedoch festgelegt werden, welche der Programmkomponente auf welcher der im System verteilten Steuerungseinrichtung ablaufen soll. Bei Steuerungssystemen mit verteilten Steuerungseinrichtungen besteht also im Allgemeinen eine feste Zuordnung zwischen den erstellten Programmkomponenten und den Hardwareeinrichtungen.

Beim Einsatz von Steuerungssystemen wird der Hardwaretyp einer Steuerungseinrichtung anhand der abzuarbeitenden Aufgabe aus unterschiedlichen Leistungsklassen ausgewählt. Die Programmkomponenten werden bei dem Entwickeln eines Steuerungsprogramms für ein Steuerungssystems entsprechend auf die einzelnen Steuerungseinrichtungen verteilt, wobei bei der Verteilung durch den Programmierer gewährleistet werden muss, dass die bereitstehenden Hardware-Ressourcen einer Steuerungseinrichtung für den Ressourcen-Bedarf einer jeweilig zugeordneten Programmkomponente ausreicht. Die physikalische Verteilung der Hardware findet sich auch in der Struktur des gesamten Programms des Steuerungssystems wieder, d.h. insbesondere in Bezug auf die manuell vorgegebene Verteilung der einzelnen Programmkomponenten auf die Steuerungseinrichtungen.

Derartige anwendungsspezifisch zusammengestellte und programmierte Steuerungssysteme sind in der Regel schwer erweiterbar, so dass bei einer nachträglichen Erweiterung einer Anlage bzw. einer Maschine die entsprechenden Steuerungseinrichtungen in der Regel durch leistungsfähigere ersetzt werden muss. Zukünftige Erweiterungen einer Anlage bzw. einer Maschine können zwar bei der Konzeption eines Steuerungssystems und der Auswahl der entsprechenden Hardware berücksichtig werden, so dass gegebenenfalls ein späterer Hardwareaustausch bei den Steuerungseinrichtungen vermieden werden kann und lediglich einen Anpassung des Steuerungsprogramm notwendig ist. Der Verwendung einer überdimensionierten, d.h. die Verwendung einer für eine entsprechende Anwendung zu leistungsfähigen Steuerungseinrichtung, steht aber in der Regel das Gebot der Kosteneffizienz entgegen.

Bei Steuerungssystemen aus mehreren Steuerungseinrichtungen innerhalb eines gemeinsamen Datennetzwerks, besteht zwar grundsätzlich die Möglichkeit, die Hardware-Ressourcen des gesamten Systems z.B. durch Hinzufügen einer zusätzlichen Steuerungseinrichtung zu erweitern, jedoch erfordert eine effektive Programmierung des Systems eine Neuverteilung der vorhandenen sowie der hinzugefügten Programmkomponenten auf die verfügbaren Steuerungseinrichtungen. Die Neuverteilung sämtlicher Programmkomponenten sowie die Festlegung ihrer Kommunikationsbeziehungen wird durch einen Programmierer manuell vorgenommen, so dass mit jeder Erweiterung quasi eine Neuentwicklung des Steuerungsprogramms eines bereits bestehenden Steuerungssystems erforderlich wird.

Aus der EP 2 251 755 A2 ist ein Verfahren zum Betrieb einer automatisierten Anlage zur industriellen Prozess- und/oder Fertigungsautomatisierung bekannt, bei welchem eine Vielzahl von Steuereinheiten mit einer Vielzahl von Sensoren und Aktoren wechselwirken, wobei durch die Steuereinheiten Applikationen umfassend. Steuerungsapplikationen zur Steuerung der Anlage ausgeführt werden, wobei eine oder mehrere der Applikationen, basierend auf einem verteilten Rechenverfahren ausgeführt werden, bei dem Rechenprozesse des oder der Applikationen auf mehrere Steuereinheiten verteilt werden.

Der vorliegenden Erfindung liegt die Aufgabe zugrunde, die Programmierbarkeit, insbesondere im Bezug auf eine bessere Skalierbarkeit eines Steuerungssystems zu vereinfachen.

Zur Lösung dieser Aufgabe schlägt die vorliegende Erfindung ein Verfahren zur Verteilung von Programmkomponenten eines Steuerungsprogramms auf wenigstens zwei in einem Steuerungssystem verteilten Steuerungseinrichtungen vor, das folgende Schritte umfasst:
a) Erstellen von wenigstens zwei Programmmodulen, wobei jedem der Programmmodule wenigstens eine Programmkomponente, eine Anzahl von Datenschnittstellen und ein Leistungsparameter zugewiesen wird, wobei mit dem Leistungsparameter eine Anforderung an die Leistungsfähigkeit einer Steuerungseinrichtungen und/oder eine Anforderung an die Leistungsfähigkeit von Datenaustauschkanälen zwischen den Steuerungseinrichtungen definiert werden, die zur Aufführbarkeit des Programmmoduls notwendig sind;
b) Verknüpfen der Programmmodule untereinander zu einem Steuerungsprogramm, wobei Datenverbindungen zwischen den Datenschnittstellen definiert werden.
c) Ermitteln der Anzahl und der Leistungsfähigkeit jeder im Steuerungssystem verfügbaren verteilten Steuerungseinrichtungen;
d) Ermitteln einer Anzahl möglicher Verteilungen der Programmmodule auf die Steuerungseinrichtungen, wobei die möglichen Verteilungen durch einen Vergleich zwischen den Anforderung gemäß der Leistungsparameter mit der Leistungsfähigkeit der Steuerungseinrichtungen verifiziert werden,
e) Auswählen einer verifizierten Verteilung der Programmmodule und entsprechendes Verteilen ihrer Programmkomponenten auf die verteilten Steuerungseinrichtungen;
f) Konfigurieren von Datenaustauschkanälen zwischen den verteilten Steuerungseinrichtungen, wobei die definierten Datenverbindungen zwischen den verteilten Programmmodulen entsprechend umgesetzt werden.

Mit den verknüpften Programmmodulen gemäß den ersten beiden Verfahrensschritten wird ein Steuerungsprogramm für ein Steuerungssystem bereitgestellt, das zu diesem Zeitpunkt noch in keiner Beziehung zu einer real verwendeten Hardware von Steuerungseinrichtungen steht. Die Verbindung zwischen den Programmkomponenten der verknüpften Programmmodule und den zur Verfügung stehenden Steuerungseinrichtungen eines realen Steuerungssystems erfolgt erst nach Fertigstellung des gesamten Steuerungsprogramms. Erst in einem weiteren Schritt, der erst nach der Fertigstellung eines gesamten Steuerungsprogramms erfolgt, muss der Programmierer festlegen, auf welcher real in einem Steuerungssystem zur Verfügung stehenden Steuerungseinrichtungen das erstellte Steuerungsprogramm ausgeführt werden soll. Eine solche Festlegung kann zum Beispiel durch eine vom Programmieren vorgegebene Liste erfolgen, die einen Datensatz von real in einem Steuerungssystem verfügbaren Steuerungseinrichtungen umfasst.

Ein wesentlicher Vorteil des Verfahrens gegenüber dem Stand der Technik ist, dass vom Programmierer im Wesentlichen eine programmmodulbasierte Programmlösung für jeweilige Automatisierungsaufgaben erstellt wird, die zunächst nicht an eine vorbestimmte Zielhardware gebunden ist.

Eine Verbindung der jeweiligen Programmkomponenten und Steuerungseinrichtungen erfolgt erst in einer späten Phase, einem sogenannten "late bindung", bei dem beispielsweise von einem Entwicklungssystem eine dynamische Verteilung der Programmkomponenten vorgenommen wird. Bei der dynamischen Verteilung werden die durch die Leistungsparameter definierten zwingenden Vorgaben in entsprechender Weise berücksichtigt.

Die Verteilung gemäß dem Verfahrensschritt e) kann bevorzugt derart erfolgen, dass im Wesentlichen eine gleichmäßige Auslastung der Steuerungseinrichtungen ermöglicht wird. Eine solche gleichmäßige Auslastung kann zum Beispiel durch einen in einem Entwicklungssystem integrierten Algorithmus ermittelt werden, für den zuvor ein oder mehrer Optimierungskriterien ausgewählt oder vorgegeben worden sind.

Ein weiteres Verteilungskriterium kann die Minimierung der Interkommunikation der Programmmodule über das Datennetzwerk oder die Minimierung des Mengengerüsts der I/O- und Eventschnittstellen zwischen Steuerungseinrichtungen darstellen.

In den Leistungsparameter kann ein Attribut bereitgestellt werden, mit dem festgelegt wird, ob ein Programmmodul ein bestimmtes Leistungsmerkmal in einer Steuerungseinrichtung zur Ausführbarkeit erfordert.

Ein entsprechendes Leistungsmerkmal kann das Erfordernis eines Motion-Kernels oder eine Verarbeitbarkeit sicher Programmteile gemäß bestimmter SIL (Sicherheits-Integritätslevel)-Spezifikationen (IEC/EN 62061 und IEC/EN 61508 Norm) sein.

Mit einem solchen Attribut können alle Kombinationen für eine Programmkomponentenverteilung ausgeschlossen werden, die diese Vorgaben nicht erfüllen, so dass ein Algorithmus zur Verteilungsoptimierung entsprechend schnell konvergiert.

Des Weitern kann in den Leistungsparameter festgelegt werden, ob ein Programmmodul redundant auf einer Anzahl unterschiedlicher Steuerungseinrichtungen ausgeführt werden soll.

Bei der dynamischen Verteilung wird die entsprechende Programmkomponente inklusive ihrer Verknüpfungen über die zugewiesenen Datenschnittstellen dupliziert und gleichzeitig auf unterschiedliche Steuerungen verteilt. Entsprechend werden die redundanten Datenaustauschkanäle zwischen den verteilten Steuerungseinrichtungen generiert, ohne dass ein Eingriff eines Programmierers erforderlich ist.

Des Weitern kann in den Leistungsparametern ein Wert für den "Quality of Service" für die Datenverbindungen bereitgestellt werden.

Des Weiteren könnte ein Wert für eine Zykluszeitanforderung des schnellsten Tasks oder für Synchronitätsanforderungen und Updatezeiten von I/O-Schnittstellen durch die Leistungsparametern vorgegeben werden.

Ein Vorteil des Verfahrens ist, dass die dynamische Verteilung entsprechenden Optimierungsregeln folgend automatisch erfolgt und gegebenenfalls mit manuellen Vorgaben durch die Leistungsparameter beeinflusst werden kann.

Die Lösung der erfindungsgemäßen Aufgabe umfasst zusätzlich ein Entwicklungssystem mit Einrichtungen zum Ausführen des Verfahrens.

Das Verfahren und das Entwicklungssystem ermöglichen eine einfache Erweiterbarkeit bestehender Steuerungssysteme. Die Hardware-Ressourcen eines bestehenden Steuerungssystems können durch ein Hinzufügen einer weiteren Hardware, d.h. einer zusätzlichen Steuerungseinrichtung an das jeweilige Datennetzwerk erweitert werden. Ein zugehöriges und bereits ebenfalls vorhandenes programmmodulbasiertes Steuerungsprogramm muss lediglich um die zusätzlichen Programmmodule mit entsprechenden Verknüpfungen für die neu hinzukommenden Automatisierungsaufgaben erweitert werden. Die Neuverteilung sämtlicher Programmkomponenten erfolgt dynamisch durch das Verfahren.

Die Erfindung wird nachfolgend anhand einer beispielhaften Ausführungsform unter Bezugnahme der beigefügten Zeichnungen detailliert beschrieben.

In den Zeichnungen zeigen:
- Fig. 1:: drei miteinander verknüpfte Programmmodule, die jeweils eine Programmfunktion, eine Anzahl von Datenschnittstellen und einen Leistungsparameter umfassen,
- Fig. 2:: zwei in einem Steuerungssystem verteilte Steuerungseinrichtungen (SPS), auf denen die Programmfunktionen verteilt sind, und
- Fig. 3:: skizzenhaft ein Entwicklungssystem gemäß der Erfindung.

In einer Fertigungsstraße müssen zum Beispiel verschiedene Automatisierungsaufgaben wahrgenommen werden. Diese werden insbesondere bei ausgedehnten Produktionsanlagen durch eine Anzahl von Steuerungseinrichtungen zum Beispiel durch speicherprogrammierbare Steuerungen (SPS) übernommen, die über ein Netzwerk datentechnisch zu einem Steuerungssystem verbunden sein können. Ein solches Datennetzwerk kann wie das PROFINET ethernetbasiert aufgebaut und dazu ausgebildet sein, sämtliche Ein- und Ausgabeschnittstellen für alle Steuerungen system- beziehungsweise netzwerkübergreifend bereitzustellen. Das heißt, alle hardwarebasierten I/O-Schnittstellen und Event-Schnittstellen sind innerhalb des gesamten Datennetzwerk für alle Teilnehmer im Netzwerk verfügbar, so dass die Verknüpfung der I/O-Schnittstellen über das Datennetzwerk des PROFINET erfolgt.

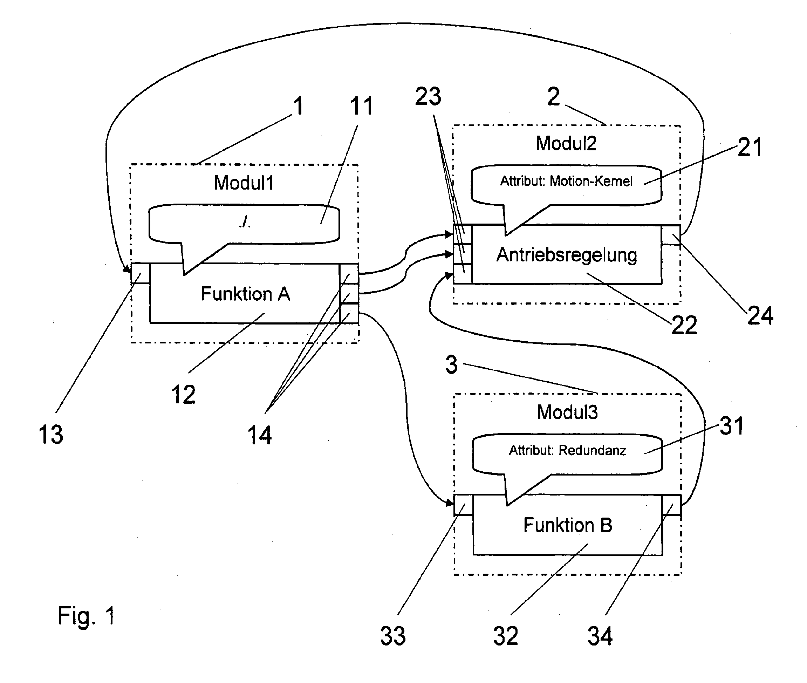

Um die jeweilige Automatisierungsaufgabe zu lösen wird zunächst mit einem computergestützten Entwicklungssystem ein applikationsspezifisches Steuerungsprogramm erstellt, das zunächst unabhängig von der Hardware eines jeweiliges Steuerungssystems ist. In der Figur 1 ist ein solches Programm für eine beispielhafte Automatisierungsaufgabe dargestellt.

Für die Erstellung des Steuerungsprogramms wird eine Anzahl von Programmmodulen 1, 2, 3 entsprechend den zu lösenden Automatisierungsaufgaben erstellt. Ein Programmmodul beinhaltet im Wesentlichen eine Programmkomponente sowie ein Leistungsparameter und eine Anzahl zugewiesener Datenschnittstellen.

Die Programmkomponenten 12, 22, 32 können zum Beispiel aus einer oder mehreren instanziierbaren Funktionen bzw. Funktionsblöcken zusammengestellt werden, deren I/O- und Event-Schnittstellen jeweils einer der Datenschnittstellen zugewiesen wird. Die Leistungsparameter der Programmmodule beinhalten Informationen mit Anforderungen an eine SPS, die zur Ausführung des Programmmoduls bzw. der jeweiligen Programmkomponente erforderlich sind. Mit den Anforderungen können z.B. funktionelle Ausstattungsmerkmale einer SPS definiert werden, wie die Verfügbarkeit eines Motion-Kernels oder die Verfügbarkeit von Sicherheitsfunktionen, oder es können bestimmte Performance-Eigenschaften einer SPS festgelegt werden, wie Takt- und Zykluszeiten und dergleichen.

Wie aus dem in der Figur 1 dargestellten Beispiel zu erkennen ist, ist dem ersten Programmmodul 1 eine Programmkomponente 12, die eine "Funktion A" enthält, sowie eine Eingangs-Datenschnittstelle 13, und eine Anzahl von drei Ausgangs-Datenschnittstellen 14 zugewiesen. Die Programmkomponente 12 erfordert keine bestimmten Hardware-Ressourcen bzw. Ausstattungsmerkmale einer SPS. Somit enthält der zugewiesene Leistungsparameter 11 des ersten Programmmoduls 1 keine Anforderungsdaten.

Das zweite Programmmodul 2 umfasst ebenfalls eine zweite Programmkomponente 22 sowie Datenschnittstellen 23, 24. Mit der Programmkomponente 22 soll eine Antriebregelung realisiert werden, die zur Ausführung einen Motion-Kernel einer SPS benötigt. Der Leistungsparameter 21 enthält somit das Attribut "Motion-Kernel", mit dem das entsprechend benötigte funktionelle Ausstattungsmerkmal einer SPS angezeigt wird.

Die dem dritten Programmmodul 3 zugeordnete dritte Programmkomponente 32 soll gemäß dem vorliegenden Beispiel redundant auf zwei unterschiedlichen SPS ausgeführt werden, so dass die jeweilig umgesetzte Automatisierungsaufgabe bei einem Ausfall einer Steuerungseinrichtung stoßfrei von der anderen SPS (Backup-Hardware) übernommen werden kann. Der Leistungsparameter 31 enthält entsprechend das Attribut "Redundanz".

Die Programmmodule 1, 2, 3 werden über die bereitstehenden Datenschnittstellen 13, 14; 23, 24; 33, 34 miteinander verknüpft, wobei die Verknüpfungen in der Figur 1 durch die Verbindungspfeile dargestellt sind.

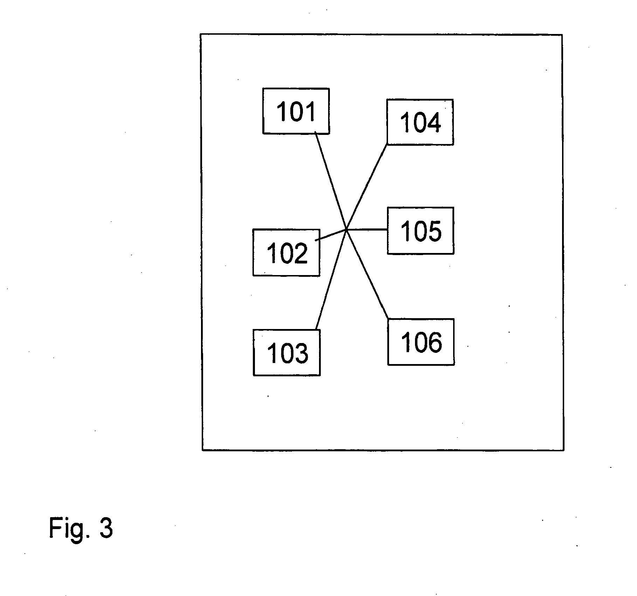

Zur Fertigstellung des Steuerungsprogramms wird dem Entwicklungssystem (Fig. 3) abschließend die verfügbaren Hardware-Ressourcen der zu programmierenden Steuerungssystems bekannt gemacht. Dieses kann zum Beispiel automatisch erfolgen, indem das Entwicklungssystem mit dem Datennetzwerk des Steuerungssystems verbunden wird und die verfügbare Hardware selbständig ausließt.

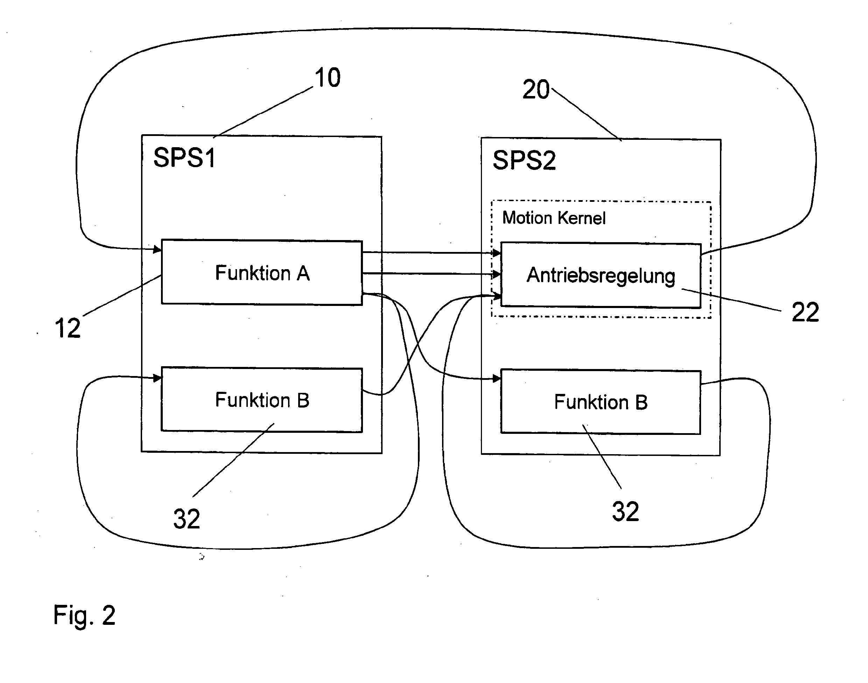

Wie in der Figur 2 zu erkennen ist, umfasst das in dem vorliegenden Beispiel dargestellte Steuerungssystem zwei in einem Steuerungssystem einer Fertigungsstraße verteilte Steuerungseinrichtungen, eine erste SPS 10 und eine zweite SPS 20. Die zweite SPS 20 verfügt über das Ausstattungsmerkmal eines Motion-Kernels, während die erste SPS 10 lediglich Standardfunktionen, also keine besonderen Ausstattungsmerkmale bereitstellt.

Das Entwicklungssystem berechnet nun die Verteilung der Programmfunktionen 12, 22, 32 der Programmmodule 1, 2, 3 unter Berücksichtigung der Vorgaben, die in den jeweils zugewiesenen Leistungsparametern 11, 21, 31 definiert wurden.

Für die mit dem Programmmodul 2 realisierte Antriebregelung muss das Entwicklungssystem sicherstellen, dass die Steuerungseinrichtung, auf der die entsprechende Programmfunktion 22 ausgeführt werden soll, über den im Leistungsparameter 21 geforderten Motion-Kernel verfügt. In dem vorliegenden Beispiel wird die Programmfunktion 22 daher der zweiten SPS 20 zugewiesen.

Die Programmfunktion 32 des dritten Programmmoduls 3 muss gemäß dem zugeordneten Leistungsparameter 31 als redundante Instanzen zwingend auf zwei unterschiedlichen Steuerungseinrichtung ausgeführt werden, und wird daher der ersten SPS 10 und der zweiten SPS 20 zugewiesen.

Für die Verteilung der Programmfunktion 12 des ersten Programmmoduls 1 sind keine ressourcenbedingte Vorgaben zu erfüllen. Im Zuge weitere Verteilungskriterien wie eine gleichmäßige Auslastung der Hardware im gesamten Steuerungssystem wird die Programmfunktion 12 der ersten SPS 10 zugewiesen.

Die Konfiguration der I/O-Schnittstellen erfolgt auf Basis der berechneten Verteilung der Programmfunktionen auf die jeweiligen Steuerungen. Dazu wird der PROFINET Controller jeder Steuerungseinrichtung entsprechend den Programmfunktionen zugeordneten Datenschnittstellen und den definierten Verknüpfungen entsprechend durch das Entwicklungssystem konfiguriert.

Soll die Fertigungsstraße zu einem späteren Zeitpunkt um zusätzliche Automatisierungsaufgaben und damit um zusätzliche Programmfunktionen bzw. Programmmodule erweitert werden, so kann das Entwicklungssystem eine neue Verteilung vornehmen, gegebenenfalls unter entsprechend geänderten Vorgaben zu Optimierung der Verteilung.

Sind die Hardware-Ressourcen in einem Steuerungssystem erschöpft, so können diese durch Hinzufügen zusätzlicher Steuerungseinrichtung in das Datennetzwerk problemlos erweitert werden. Nachdem die erweiterte bzw. geländete Hardware dem Entwicklungssystem bekannt gemacht worden ist, kann eine dynamische Neuverteilung der Programmfunktionen erfolgen. Ein in der Figur 1 dargestelltes, ursprünglich erstelltes applikationsspezifisches Steuerungsprogramm für eine Automatisierungsaufgabe, kann bei der dynamischen Neuverteilung auf eine geänderte Hardware eines jeweiligen Steuerungssystem beibehalten werden. Gegebenenfalls werden lediglich Programmmodule für neue Automatisierungsaufgeben dem Steuerungsprogramm hinzugefügt, die entsprechend mit den bestehenden Programmmodulen verknüpft werden müssen. Eine komplette Neuprojektierung des Automatisierungsprogramms ist vorteilhaftere Weise nicht erforderlich.

In Figur 3 ist skizzenhaft ein Entwicklungssystem zum Ausführen des vorstehend beschriebenen Verfahrens dargestellt. Dieses umfasst eine Eingabeeinrichtung 101 zum Erstellen und Verknüpfen von wenigstens zwei Programmmodulen 1, 2, 3, wobei jedes Programmmodul wenigstens eine Programmkomponente, eine Anzahl Datenschnittstellen 13, 14, 23, 24, 33, 34 und ein Leistungsparameter 11, 21, 31 umfasst und wobei mit dem Leistungsparameter eine Anforderung an die Leistungsfähigkeit einer Steuerungseinrichtungen 10, 20 zur Ausführbarkeit des Programmmoduls 1, 2, 3 definiert wird; eine Ermittlungseinrichtung 102 zum Ermitteln einer Anzahl und einer Leistungsfähigkeit von den in einem Steuerungssystem verfügbaren verteilten Steuerungseinrichtungen 10, 20. Das Entwicklungssystem umfasst ferner eine Vergleichseinrichtung 103 zum Verifizieren von möglichen Verteilungen von Programmmodulen 1, 2, 3 auf die verfügbaren Steuerungseinrichtungen 10, 20, wobei sich die Verifikation aus einen Vergleich zwischen den Anforderung gemäß den Leistungsparametern 11, 21, 31 mit den Leistungsfähigkeiten der Steuerungseinrichtungen 10, 20 ergibt. Das Entwicklungssystem umfasst ferner eine Auswahleinrichtung 104 zum Auswählen einer verifizierten Verteilung der Programmmodule 1, 2, 3. Das Entwicklungssystem umfasst ferner eine Verteilungseinrichtung 105 zum Verteilen der Programmkomponenten auf die verteilten Steuerungseinrichtungen 10, 20 gemäß der ausgewählten Verteilung der Programmmodule 1, 2, 3. Das Entwicklungssystem umfasst ferner eine Konfigurationseinrichtung 106 zum Konfigurieren von Datenaustauschkanälen zwischen den verteilten Steuerungseinrichtungen 10, 20, die ausgebildet ist, die definierten Datenverbindungen zwischen den verteilten Programmmodulen 1, 2, 3 entsprechend umzusetzen.

## Patentansprüche

1. Verfahren zur Verteilung von Programmkomponenten eines Steuerungsprogramms auf wenigstens zwei in einem Steuerungssystem verteilten Steuerungseinrichtungen, umfassend folgende Schritte:
a) Erstellen von wenigstens zwei Programmmodulen (1, 2, 3), wobei jedem der Programmmodule wenigstens eine Programmkomponente (12, 22, 32), eine Anzahl von Datenschnittstellen (13, 14; 23, 24; 33, 34) und ein Leistungsparameter (11, 21, 31) zugewiesen wird, wobei mit dem Leistungsparameter eine Anforderung an die Leistungsfähigkeit einer Steuerungseinrichtungen und/oder eine Anforderung an die Leistungsfähigkeit von Datenaustauschkanälen zwischen den Steuerungseinrichtungen definiert werden, die zur Aufführbarkeit des Programmmoduls notwendig sind;
b) Verknüpfen der Programmmodule (1, 2, 3) untereinander zu einem Steuerungsprogramm, wobei Datenverbindungen zwischen den Datenschnittstellen (13, 14; 23, 24; 33, 34) definiert werden;
c) Ermitteln der Anzahl und der Leistungsfähigkeit jeder im Steuerungssystem verfügbaren verteilten Steuerungseinrichtungen (10, 20);
d) Ermitteln einer Anzahl möglicher Verteilungen der Programmmodule (1, 2, 3) auf die verfügbaren Steuerungseinrichtungen (10, 20), wobei die möglichen Verteilungen durch einen Vergleich zwischen den Anforderung gemäß der Leistungsparameter mit der Leistungsfähigkeit der Steuerungseinrichtungen verifiziert werden,
e) Auswählen einer verifizierten Verteilung der Programmmodule und entsprechendes Verteilen ihrer Programmkomponenten (12, 22, 32) auf die verteilten Steuerungseinrichtungen (10, 20);
f) Konfigurieren von Datenaustauschkanälen zwischen den verteilten Steuerungseinrichtungen (10, 20), wobei die definierten Datenverbindungen zwischen den verteilten Programmmodulen (1, 2, 3) entsprechend umgesetzt werden.

2. Verfahren nach vorstehendem Anspruch, **dadurch gekennzeichnet, dass** gemäß Schritt e) eine Verteilung ausgewählt wird, die eine im Wesentlichen gleichmäßige Auslastung der Steuerungseinrichtungen ermöglicht.

3. Verfahren nach einem der vorstehendem Ansprüche, **dadurch gekennzeichnet, dass** ein Attribut in den Leistungsparameter (11, 21, 31) bereitgestellt wird, mit dem festgelegt wird, ob ein Programmmodul (1, 2, 3) ein bestimmtes Leistungsmerkmal in der Steuerungseinrichtung (10, 20) zur Ausführbarkeit erfordert.

4. Verfahren nach einem der vorstehenden Ansprüche, **dadurch gekennzeichnet, dass** ein Wert für den Quality of Service für die Datenverbindungen in den Leistungsparametern (11, 21, 31) bereitgestellt wird.

5. Verfahren nach einem der vorstehenden Ansprüche, **dadurch gekennzeichnet, dass** ein Attribut in den Leistungsparameter (11, 21, 31) bereitgestellt wird, mit dem festgelegt wird, ob ein Programmmodul (1, 2, 3) redundant auf einer Anzahl unterschiedlicher Steuerungseinrichtungen (10, 20) ausgeführt werden soll.

6. Entwicklungssystem zum Ausführen des Verfahrens gemäß einem der vorstehenden Ansprüche, umfassend eine Eingabeeinrichtung (101) zum Erstellen und Verknüpfen von wenigstens zwei Programmmodulen (1, 2, 3), wobei jedes Programmmodul wenigstens eine Programmkomponente, eine Anzahl Datenschnittstellen (13, 14; 23, 24; 33, 34) und ein Leistungsparameter (11, 21, 31) umfasst und wobei mit dem Leistungsparameter eine Anforderung an die Leistungsfähigkeit einer Steuerungseinrichtungen (10, 20) und/oder eine Anforderung an die Leistungsfähigkeit von Datenaustauschkanälen zwischen den Steuerungseinrichtungen definiert wird, die zur Aufführbarkeit des Programmmoduls (1, 2, 3) notwendig sind;
eine Ermittlungseinrichtung (102) zum Ermitteln einer Anzahl und einer Leistungsfähigkeit von den in einem Steuerungssystem verfügbaren verteilten Steuerungseinrichtungen (10, 20);
eine Vergleichseinrichtung (103) zum Verifizieren von möglichen Verteilungen von Programmmodulen (1, 2, 3) auf die verfügbaren Steuerungseinrichtungen (10, 20), wobei sich die Verifikation aus einen Vergleich zwischen den Anforderung gemäß den Leistungsparametern (11, 21, 31) mit den Leistungsfähigkeiten der Steuerungseinrichtungen (10, 20) ergibt;
eine Auswahleinrichtung (104) zum Auswählen einer verifizierten Verteilung der Programmmodule (1, 2, 3); eine Verteilungseinrichtung (105) zum Verteilen der Programmkomponenten auf die verteilten Steuerungseinrichtungen (10, 20) gemäß der ausgewählten Verteilung der Programmmodule (1, 2, 3); und
eine Konfigurationseinrichtung (106) zum Konfigurieren von Datenaustauschkanälen zwischen den verteilten Steuerungseinrichtungen (10, 20), die ausgebildet ist, die definierten Datenverbindungen zwischen den verteilten Programmmodulen (1, 2, 3) entsprechend umzusetzen.

## Claims

1. Method for distributing program components of a control program to at least two control devices which are distributed in a control system, comprising the following steps:
a) producing at least two program modules (1, 2, 3), wherein each of the program modules is allocated at least one program component (12, 22, 32), a plurality of data interfaces (13, 14; 23, 24; 33, 34) and a performance parameter (11, 21, 31), wherein a requirement in respect of the performance capability of a control devices *[sic]* and/or a requirement in respect of the performance capability of data exchange channels between the control devices are defined with the performance parameter, these being required in order to be able to execute the program module;
b) linking the program modules (1, 2, 3) to one another to form a control program, wherein data connections are defined between the data interfaces (13, 14; 23, 24; 33, 34);
c) ascertaining the number and the performance capability of each distributed control devices *[sic]* (10, 20) which are available in the control system;
d) ascertaining a number of possible distributions of the program modules (1, 2, 3) to the available control devices (10, 20), wherein the possible distributions are verified by a comparison between the requirement according to the performance parameter and the performance capability of the control devices;
e) selecting a verified distribution of the program modules and corresponding distribution of the program components (12, 22, 32) thereof to the distributed control devices (10, 20);
f) configuring data exchange channels between the distributed control devices (10, 20), wherein the defined data connections between the distributed program modules (1, 2, 3) are implemented accordingly.

2. Method as claimed in the preceding claim, **characterised in that** according to step e) a distribution is selected which allows essentially uniform utilisation of the control devices.

3. Method as claimed in any one of the preceding claims, **characterised in that** an attribute is provided in the performance parameter (11, 21, 31), this being used to establish whether a program module (1, 2, 3) requires a particular performance feature in the control device (10, 20) for executability.

4. Method as claimed in any one of the preceding claims, **characterised in that** a value for the quality of service for the data connections is provided in the performance parameters (11, 21,31).

5. Method as claimed in any one of the preceding claims, **characterised in that** an attribute is provided in the performance parameter (11, 21, 31), this being used to establish whether a program module (1, 2, 3) is to be redundantly executed one a plurality of different control devices (10, 20).

6. Development system for carrying out the method as claimed in any one of the preceding claims, comprising:
an input device (101) for creating and linking at least two program modules (1, 2, 3), wherein each program module includes at least one program component, a plurality of data interfaces (13, 14; 23, 24; 33, 34) and a performance parameter (11, 21, 31), and wherein a requirement in respect of the performance capability of a control devices *[sic]* (10, 20) and/or a requirement in respect of the performance capability of data exchange channels between the control devices is defined with the performance parameter, these being required in order to be able to execute the program module (1, 2, 3);
an ascertaining device (102) for ascertaining a number and a performance capability of the distributed control devices (10, 20) available in a control system;
a comparaison device (103) for verifying possible distributions of program modules (1, 2, 3) to the available control devices (10, 20), wherein the verification results from a comparison between the requirement according to the performance parameters (11, 21, 31) and the performance capabilities of the control devices (10,20);
a selection device (104) for selecting a verified distribution of the program modules (1, 2, 3);
a distribution device (105) for distributing the program components to the distributed control devices (10, 20) according to the selected distribution of the program modules (1, 2, 3); and
a configuration device (106) for configuring data exchange channels between the distributed control devices (10, 20), which is designed to correspondingly implement the defined data connections between the distributed program modules (1, 2, 3).

## Revendications

1. Procédé de répartition de composants de programme d'un programme de commande vers au moins deux dispositifs de commande distribués dans un système de commande, comprenant les étapes suivantes :
a) création d'au moins deux modules de programme (1, 2, 3), au moins un composant de programme (12, 22, 32), une pluralité d'interfaces de données (13, 14 ; 23, 24 ; 33, 34) et un paramètre de puissance (11, 21, 31) étant affectés à chaque module de programme, le paramètre de puissance permettant de définir une demande de performance d'un dispositif de commande et/ou une demande de performance de canaux de communication de données entre les dispositifs de commande, exigés pour permettre l'exécution du module de programme ;
b) association des modules de programme (1, 2, 3) entre eux pour former un programme de commande, des liaisons de données étant définies entre les interfaces de données (13, 14 ; 23, 24 ; 33, 34) ;
c) détermination du nombre des dispositifs de commande (10, 20) disponibles distribués dans le système de commande et de la performance de chacun de ceux-ci ;
d) détermination d'un nombre de répartitions possibles des modules de programme (1, 2, 3) vers les dispositifs de commande (10, 20) disponibles, les répartitions possibles étant contrôlées par comparaison entre la demande conformément aux paramètres de puissance et la performance des dispositifs de commande ;
e) sélection d'une répartition contrôlée des modules de programme et répartition correspondante de leurs composants de programme (12, 22, 32) vers les dispositifs de commande (10, 20) distribués ;
f) configuration de canaux de communication de données entre les dispositifs de commande (10, 20) distribués, les liaisons de données définies entre les modules de programme (1, 2, 3) répartis étant converties en conséquence.

2. Procédé selon la revendication précédente, **caractérisé en ce qu'**en étape e), une répartition permettant une charge sensiblement homogène des dispositifs de commande est sélectionnée.

3. Procédé selon l'une des revendications précédentes, **caractérisé en ce qu'**un attribut est élaboré dans les paramètres de puissance (11, 21, 31), lequel permet de constater si un module de programme (1, 2, 3) exige une caractéristique de puissance définie pour exécutabilité dans le dispositif de commande (10, 20).

4. Procédé selon l'une des revendications précédentes, **caractérisé en ce qu'**une valeur est élaborée pour la qualité de service des liaisons de données dans les paramètres de puissance (11, 21, 31).

5. Procédé selon l'une des revendications précédentes, **caractérisé en ce qu'**un attribut est élaboré dans les paramètres de puissance (11, 21, 31), lequel permet de constater si un module de programme (1, 2, 3) doit être exécuté de manière redondante dans un nombre de dispositifs de commande (10, 20) différents.

6. Système de développement pour l'exécution du procédé selon l'une des revendications précédentes, comprenant un dispositif d'entrée (101) pour créer et associer au moins deux modules de programme (1, 2, 3), chaque module de programme comprenant au moins un composant de programme, une pluralité d'interfaces de données (13, 14 ; 23, 24 ; 33, 34) et un paramètre de puissance (11, 21, 31), et le paramètre de puissance permettant de définir une demande de performance d'un dispositif de commande (10, 20) et/ou une demande de performance de canaux de communication de données entre les dispositifs de commande, exigés pour permettre l'exécution du module de programme (1, 2, 3) ;
un dispositif de détermination (102) pour déterminer un nombre des dispositifs de commande (10, 20) disponibles distribués dans un système de commande et une performance de ceux-ci ;
un dispositif de comparaison (103) pour contrôler les répartitions possibles de modules de programme (1, 2, 3) vers les dispositifs de commande (10, 20) disponibles, le contrôle étant effectué par comparaison entre la demande conformément aux paramètres de puissance (11, 21, 31) et la performance des dispositifs de commande (10, 20) ;
un dispositif de sélection (104) pour sélectionner une répartition contrôlée des modules de programme (1, 2, 3) ;
un dispositif de répartition (105) pour répartir les composants de programme vers les dispositifs de commande (10, 20) distribués conformément à la répartition sélectionnée des modules de programme (1, 2, 3) ; et
un dispositif de configuration (106) pour configurer des canaux de communication de données entre les dispositifs de commande (10, 20) distribués, et prévu pour convertir en conséquence les liaisons de données définies entre les modules de programme (1, 2, 3) répartis.
